# EUROPEAN PATENT SPECIFICATION

(11) **EP 4 290 300 B1**
(45) Date of publication and mention of the grant of the patent: **08.10.2025**
(21) Application number: 23178369.7
(22) Date of filing: 09.06.2023
(51) Int. Cl.: G02C 7/04, G02C 11/00, B29D 11/00

(54) **CONTACT LENS**
KONTAKTLINSE
LENTILLE DE CONTACT

(30) Priority: 12.06.2022 US 202263351432 P
(43) Date of publication of application: 13.12.2023
(73) Proprietor: Pegavision Corporation, Taoyuan City 333 (TW)
(72) Inventor: HUANG, Yi-Fang, 893 Jincheng Township (TW); LIN, Shih-Siang, 239 New Taipei City (TW); CHEN, Po-Chun, 242 New Taipei City (TW)
(74) Representative: Viering, Jentschura & Partner mbB Patent- und Rechtsanwälte

(56) References cited:
- WO-A1-2021/148548
- CN-A- 108 065 909
- US-A1- 2013 184 554
- US-A1- 2014 371 559
- US-A1- 2016 054 593
- US-A1- 2022 163 819

## Description

### FIELD OF THE INVENTION

The present invention relates to a contact lens, and more particularly to a smart contact lens.

### BACKGROUND OF THE INVENTION

US 2013/184554A1 A1 discloses a device adapted to measure intraocular pressure comprising: a corneal contact lens having a pressure sensor mounted in a recess or cavity in the contact lens, and wherein the contact lens has a back surface which is formed so as to protrude in a desired portion beyond the profile of the adjacent part of the lens and thus to press against the cornea, which protruding portion experiences a reactive deformation which is detected directly or indirectly by the pressure sensor.

Further embodiments are known from WO 2021/148548 A1 and CN 108065909 A.

A conventional smart contact lens requires a circuit structure to be embedded therein, but the circuit structure is difficult to be accurately embedded at a specific position of the conventional smart contact lens, so that high conformity is difficult to be achieved in mass production of the conventional smart contact lens.

### SUMMARY OF THE INVENTION

In response to the above-referenced technical inadequacies, the present invention provides a contact lens to effectively improve on the issues associated with conventional smart contact lenses according to independent claim 1. The dependent claims show further embodiments of claim 1.

In order to solve the above-mentioned problems, one of the technical aspects adopted by the present invention is to provide a contact lens, which includes a lens body and an embedded module. The lens body includes an optical portion and an annular wearing portion that surrounds the optical portion. The lens body has a front surface and a rear surface that is opposite to the front surface. The embedded module is embedded in the annular wearing portion and includes a front supporting ring, a rear supporting ring, and a circuit structure. The front supporting ring is made of an eye-friendly material. The front supporting ring surrounds the optical portion and has a front curved surface and a rear carrying surface. The front curved surface is flush with the front surface of the lens body. The rear supporting ring is made of an eye-friendly material. The rear supporting ring surrounds the optical portion and has a rear curved surface and a front carrying surface. The rear curved surface is flush with the rear surface of the lens body so as to be jointly configured for being worn on an eye. The circuit structure is sandwiched between the rear carrying surface of the front supporting ring and the front carrying surface of the rear supporting ring. The circuit structure is entirely embedded in the annular wearing portion.

Therefore, in the contact lens provided by the present invention, the contact lens is designed to have at least one kind of the front supporting ring, the rear supporting ring, and the supporting bodies, which are made of the eye-friendly material, for clamping and pre-positioning the circuit structure therebetween, thereby facilitating the high precision positioning of the circuit structure in the manufacturing process of the contact lens. Accordingly, the contact lens can have a high conformity in mass production.

These and other aspects of the present invention will become apparent from the following description of the embodiment taken in conjunction with the following drawings and their captions, although variations and modifications therein may be affected without departing from the scope of the novel concepts of the invention.

### BRIEF DESCRIPTION OF THE DRAWINGS

The described embodiments may be better understood by reference to the following description and the accompanying drawings, in which:
FIG. 1 is a schematic perspective view of a contact lens according to a first embodiment of the present invention;
FIG. 2 is a schematic top view of FIG. 1;
FIG. 3 is a schematic planar view showing the contact lens worn on a user's eye according to a first embodiment of the present invention;
FIG. 4 is a schematic cross-sectional view taken along line IV-IV of FIG. 1;
FIG. 5 is a schematic enlarged view of part V of FIG. 4;
FIG. 6 is a schematic cross-sectional view taken along line VI-VI of FIG. 1;
FIG. 7 is a schematic perspective view of the contact lens in another configuration according to the first embodiment of the present invention;
FIG. 8 is a schematic top view of FIG. 7;
FIG. 9 is a schematic cross-sectional view taken along line IX-IX of FIG. 7;
FIG. 10 is a schematic perspective view of the contact lens according to a second embodiment of the present invention;
FIG. 11 is a schematic top view of FIG. 10;
FIG. 12 is a schematic cross-sectional view taken along line XII-XII of FIG. 10;
FIG. 13 is a schematic cross-sectional view of the contact lens according to a third embodiment of the present invention;
FIG. 14 is a schematic enlarged view of part XIV of FIG. 13;
FIG. 15 is a schematic cross-sectional view taken along another line of the contact lens according to the third embodiment of the present disclosure;
FIG. 16 is a schematic cross-sectional view of the contact lens according to a fourth embodiment of the present invention;
FIG. 17 is a schematic enlarged view of part XVII of FIG. 16; and
FIG. 18 is a schematic cross-sectional view taken along another line of the contact lens according to the fourth embodiment of the present disclosure.

### DETAILED DESCRIPTION OF THE EXEMPLARY EMBODIMENTS

The present invention is as defined by the independent claim. It is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

### [First Embodiment]

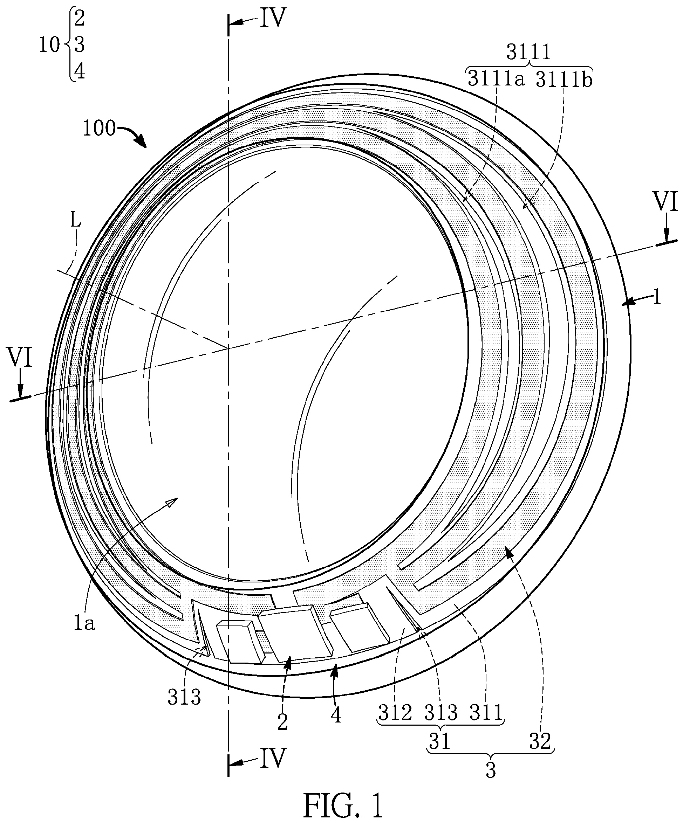

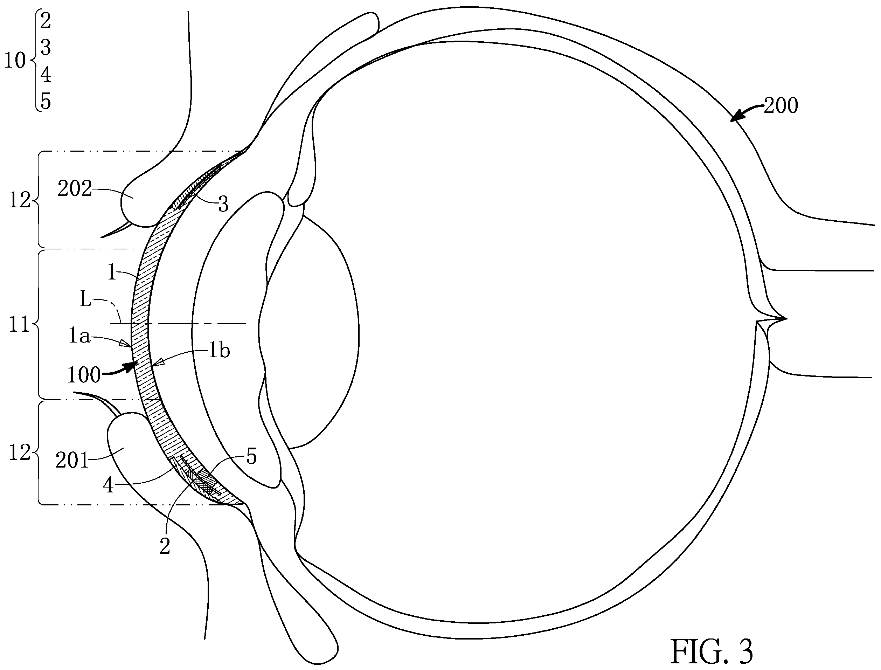

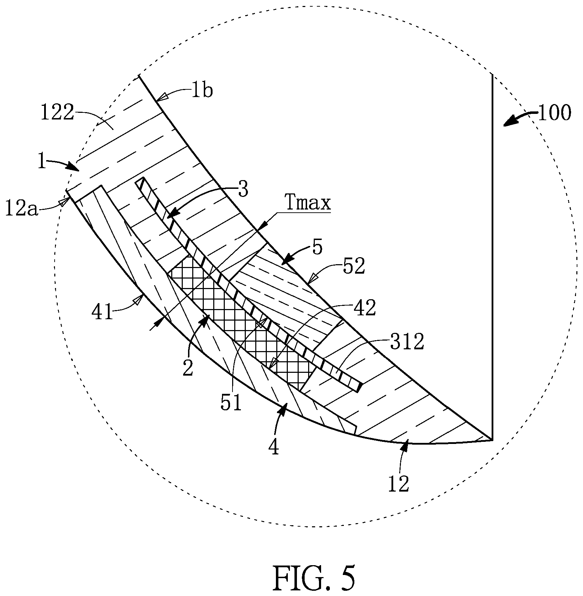

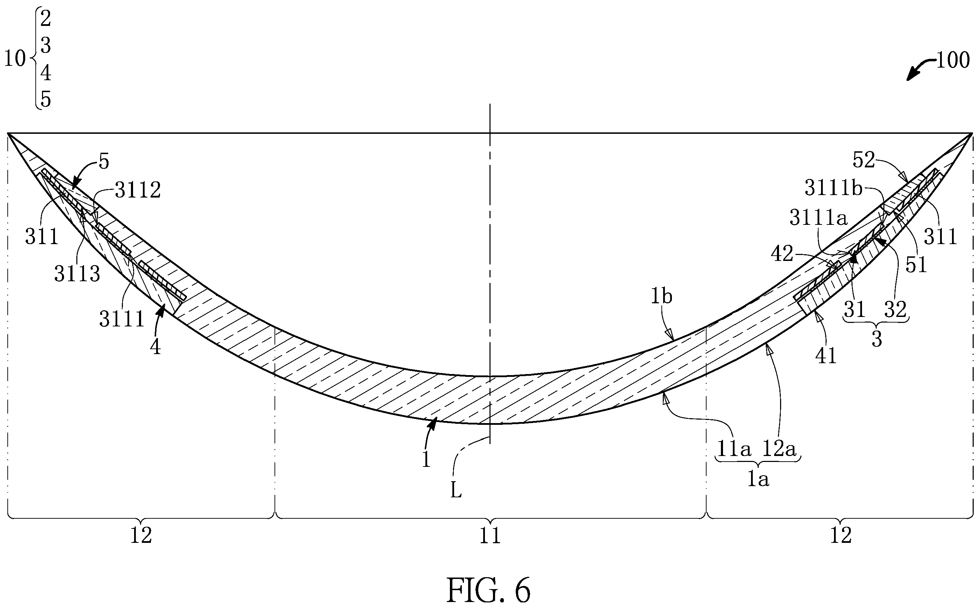

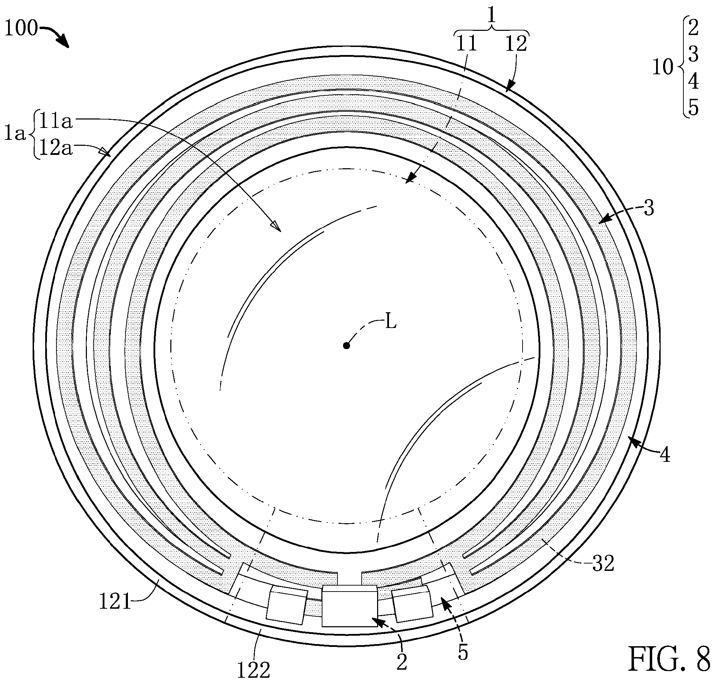

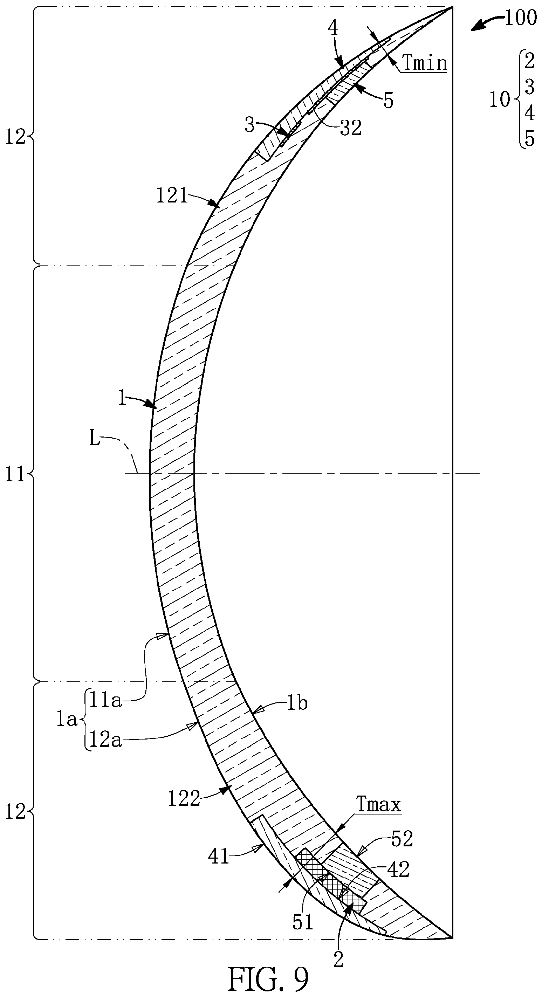

Referring to FIG. 1 to FIG. 9, a first embodiment of the present invention is provided. As shown in FIG. 1 to FIG. 6, the present embodiment provides a contact lens 100 that can be referred to as a smart contact lens. The contact lens 100 can be worn on an eye 200 of a user (as shown in FIG. 3) or can be embedded in the eye 200 (not shown in the drawings) according to design requirements.

Moreover, the contact lens 100 in the present embodiment can have a correcting function for a refractive error that includes hyperopia, myopia, astigmatism, presbyopia, or astigmatism-presbyopia; or, the contact lens 100 can be a makeup lens without the correcting function.

The contact lens 100 in the present embodiment includes a lens body 1 and an embedded module 10 that is embedded in the lens body 1. The embedded module 10 includes a front supporting ring 4, a rear supporting ring 5 facing toward the front supporting ring 4, an electronic component 2 sandwiched between the front supporting ring 4 and the rear supporting ring 5, and a circuit structure 3 that is sandwiched between the front supporting ring 4 and the rear supporting ring 5 and that is electrically coupled to the electronic component 2, but the present invention is not limited thereto. For example, in other embodiments of the present invention not shown in the drawings, according to design requirements, the embedded module 10 can include only the front supporting ring 4, the rear supporting ring 5, and the circuit structure 3, and be provided without the electronic component 2. In addition, any one of the front supporting ring 4 and the rear supporting ring 5 can be regard as a supporting body. The following description describes the structural and connection relationship of each component of the contact lens 100.

The lens body 100 in the present embodiment is formed by solidifying a hydrogel (e.g., p-HEMA) or a silicone hydrogel, but the present invention is not limited thereto. The lens body 1 includes an optical portion 11 and an annular wearing portion 12 that surrounds the optical portion 11. The optical portion 11 can be formed with or without the correcting function for the refractive error according to design requirements. It should be noted that the optical portion 11 of the present embodiment is provided without any component embedded therein, but the optical portion 11 can also be formed to have at least one component embedded therein according to design requirements (e.g., when the contact lens 100 is applied to a digital zoom device) and is not limited by the description of the present embodiment.

Moreover, the optical portion 11 defines a central axis L, and a center of the optical portion 11 and a center of the annular wearing portion 12 are located on the central axis L. The annular wearing portion 12 is connected to an outer edge of the optical portion 11 and is substantially in a circular ring shape, and the embedded module 10 is embedded in the annular wearing portion 12. In addition, a production manner relevant to the embedded module 10 embedded in the annular wearing portion 12 (or a manufacturing method of the contact lens 100) can be adjusted or changed according to design requirements, but the present invention is not limited thereto.

Specifically, the embedded module 10 is embedded in the annular wearing portion 12, and each of the front supporting ring 4 and the rear supporting ring 5 surrounds (an outer side of) the optical portion 11 and has a center located on the central axis L. The front supporting ring 4 has a front curved surface 41 and a rear carrying surface 42, and the rear supporting ring 5 has a rear curved surface 52 and a front carrying surface 51 that faces toward the rear carrying surface 42.

Furthermore, the electronic component 2 and the circuit structure 3 are sandwiched between the rear carrying surface 42 of the front supporting ring 4 and the front carrying surface 51 of the rear supporting ring 5, such that the electronic component 2 and the circuit structure 3 can be entirely embedded in the annular wearing portion 12. In the present embodiment, at least one of the front supporting ring 4 and the rear supporting ring 5 overlaps an entirety of the electronic component 2 and an entirety of the circuit structure 3 (along the central axis L), but the present invention is not limited thereto. Moreover, lateral sides of the electronic component 2 and lateral sides of the circuit structure 3 are gaplessly connected to the annular wearing portion 12 (e.g., a lower eyelid region 122 described in the following description).

In addition, any one of the front supporting ring 4 and the rear supporting ring 5 is made of an eye-friendly material that can be a hydrogel (e.g., p-HEMA) or a silicone hydrogel. The eye-friendly material can allow the front supporting ring 4 and the rear supporting ring 5 to preferably have properties (e.g., an oxygen permeability) that is similar or substantially identical to properties of the lens body 1, and the eye-friendly material of any one of the front supporting ring 4 and the rear supporting ring 5 can be different from that of and the lens body 1, but the present invention is not limited by the present embodiment.

In summary, in the contact lens 100 provided by the present embodiment, the contact lens 100 is designed to have the front supporting ring 4 and the rear supporting ring 5, which are made of the eye-friendly material, for clamping and pre-positioning the circuit structure 3 and the electronic component 2 therebetween, thereby facilitating the high precision positioning of the circuit structure 3 and the electronic component 2 in the manufacturing process of the contact lens 100. Accordingly, the contact lens 100 can have a high conformity in mass production.

Specifically, when the circuit structure 3 and the electronic component 2 are disposed in a forming mold (not shown in the drawings), positioning structures of the forming mold abut against the front supporting ring 4 and the rear supporting ring 5 to precisely position the circuit structure 3 and the electronic component 2 to a predetermined position, such that a hydrogel or a silicone hydrogel is injected into the forming mold to encapsulate the embedded module 10, and is solidified to form the lens body 1. After the contact lens 100 is taken out from the forming mold, parts of the front supporting ring 4 and the rear supporting ring 5 abutting against the positioning structures of the forming mold respectively form the front curved surface 41 and the rear curved surface 52.

Specifically, the annular wearing portion 12 has a layout region 121 being C-shaped and a lower eyelid region 122 that is arranged between two ends of the layout region 121. The electronic component 2 is embedded in the lower eyelid region 122 of the annular wearing portion 12. When the contact lens 100 is worn on the eye 200, the lower eyelid region 122 and the electronic component 2 are arranged inside of a lower eyelid 201 of the eye 200 that is less sensitive than another portion of the eye 200, thereby effectively reducing a foreign body sensation (FBS) of the user.

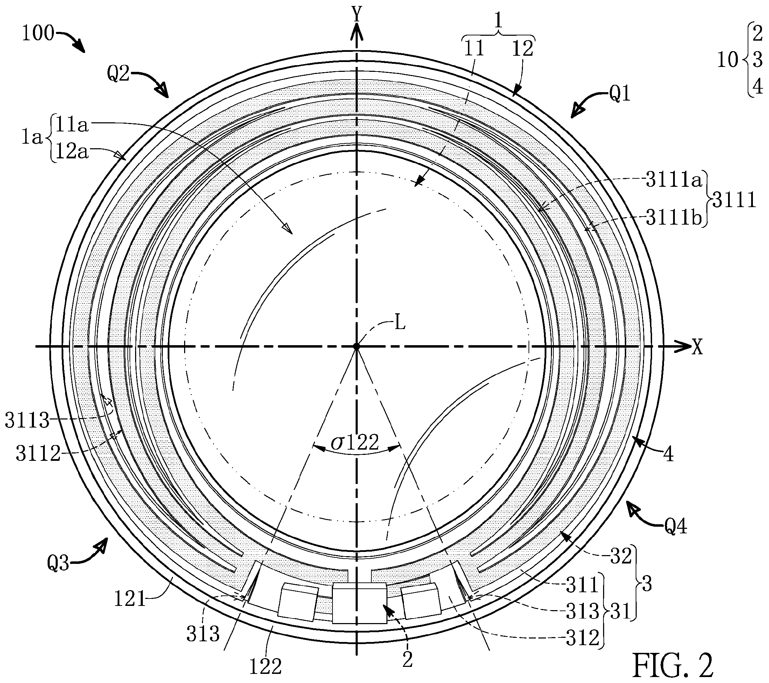

In other words, as shown in FIG. 2 to FIG. 6, (surfaces of) the lens body 1 includes a rear surface 1b and a front surface 1a that is arranged opposite to the rear surface 1b. The rear curved surface 52 is flush with the rear surface 1b of the lens body 1 so as to jointly provide (or have) a predetermined curvature for being worn on the eye 200. In other words, the predetermined curvature is only relevant for allowing the contact lens 100 to be worn on (or smoothly attached to) the eye 200. In addition, the rear curved surface 52 of the rear supporting ring 5 of and the rear surface 1b of the lens body 1 preferably have no slot (or no hole), but the present invention is not limited thereto.

Moreover, the front surface 1a has a viewable surface 11a corresponding in position to the optical portion 11, and the front curved surface 41 of the front supporting ring 4 is flush with the front surface 1a of the lens body 1 so as to jointly form a free curved surface 12a that corresponds in position to the annular wearing portion 12. The front curved surface 41 of the front supporting ring 4 is flush with the front surface 1a of the lens body 1 and preferably has no slot (or no hole) formed thereon, but the present invention is not limited thereto. In other words, an outer surface of the contact lens 100 has no slot (or no hole). The viewable surface 11a has a first curvature relevant to an optical design for correcting the refractive error; or, the first curvature of the viewable surface 11a and the rear surface 1b can jointly form a structure with no diopter.

Specifically, the first curvature of the viewable surface 11a is different from a second curvature of the free curved surface 12a, and a thickness of the annular wearing portion 12 gradually increases in a direction toward the electronic component 2 (or the lower eyelid region 122), but the present invention is not limited thereto. For example, in other embodiments of the present invention not shown in the drawings, the first curvature can be substantially equal to the second curvature, and the thickness of the annular wearing portion 12 is substantially uniform.

In other words, through the front supporting ring 4 and the rear supporting ring 5, any position of the annular wearing portion 12 of the contact lens 100 can be provided to have at least one of the electronic component 2 embedded therein according to design requirements. For example, in other embodiments of the present invention not shown in the drawings, two opposite sides of the annular wearing portion 12 in a horizontal direction of the eye 200 can each be provided to have at least one of the electronic component 2 embedded therein through the front supporting ring 4 and the rear supporting ring 5, so that the annular wearing portion 12 has a largest thickness in the horizontal direction and becomes gradually thinner in a vertical direction of the eye 200. Accordingly, the above arrangement of the contact lens 100 can enable the contact lens 100 to receive at least two of the electronic components 2 and to reduce the FBS of the user.

In summary, the contact lens 100 of the present embodiment is provided with the free curved surface 12a arranged on the front surface 1a of the lens body 1 and the front curved surface 41 of the front supporting ring 4, so that a thickness of the layout region 121 does not need to be based completely on (or be equal to) a thickness of the lower eyelid region 122 for thinning the layout region 121. Accordingly, an oxygen permeability of the layout region 121 can be effectively increased, and the FBS of the contact lens 100 can be reduced (or improved).

In order to further increase the oxygen permeability of the layout region 121 and further reduce the FBS of the contact lens 100, the contact lens 100 preferably has at least one of the technical features disclosed in the following paragraphs by adjusting the second curvature of the free curved surface 12a, but the present invention is not limited thereto.

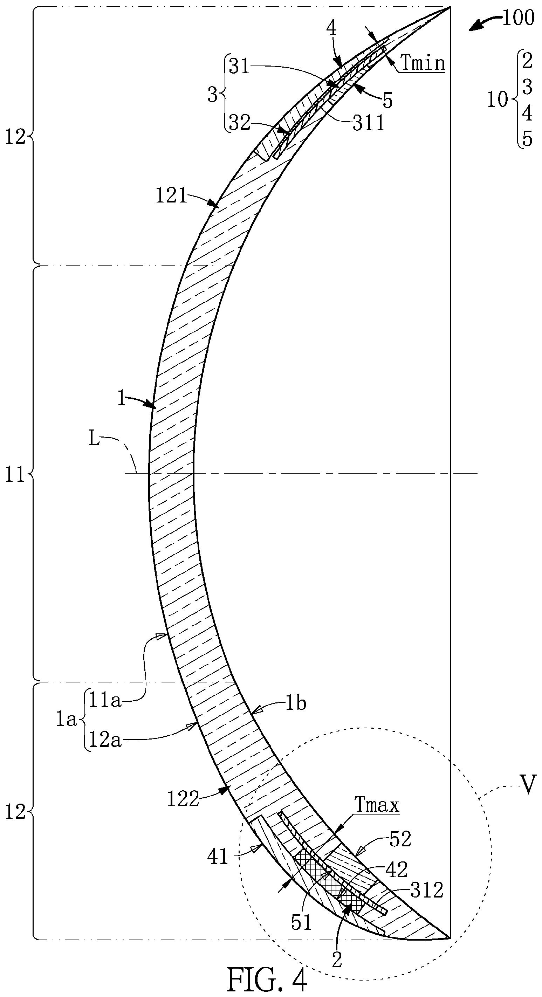

The annular wearing portion 12 (and/or the embedded module 10) has a largest thickness Tmax located at a part of the annular wearing portion 12 (e.g., the lower eyelid region 122) corresponding in position to the electronic component 2, and also has a smallest thickness Tmin located at a part of the layout region 121 (e.g., a top part of the layout region 121 shown in FIG. 4) away from the lower eyelid region 122. In other words, when the contact lens 100 is worn on the eye 200, the part of the annular wearing portion 12 (and/or the embedded module 10) of the contact lens 100 having the largest thickness Tmax is located inside of the lower eyelid 201 of the eye 200, and the part of the annular wearing portion 12 (and/or the embedded module 10) of the contact lens 100 having the smallest thickness Tmin is located inside of the upper eyelid 202 of the eye 200. The largest thickness Tmax and the smallest thickness Tmin in the present embodiment respectively correspond in position to the lower eyelid 201 and the upper eyelid 202 of the user, but the relationship between the thickness of the contact lens 100 and the eyelids 201, 202 of the user in the present invention is not limited thereto.

The circuit structure 3 arranged in the embedded module 10 can be independently used (not shown in the drawings) or can be used in cooperation with the electronic component 2, so that the circuit structure 3 (and the electronic component) can be electrically or physically driven to implement at least one of functions including energy reception, wireless signal transmission, digital calculation, sensing and monitoring, pressure application, current release, image projection, optical zoom, and power storage, but the present invention is not limited thereto.

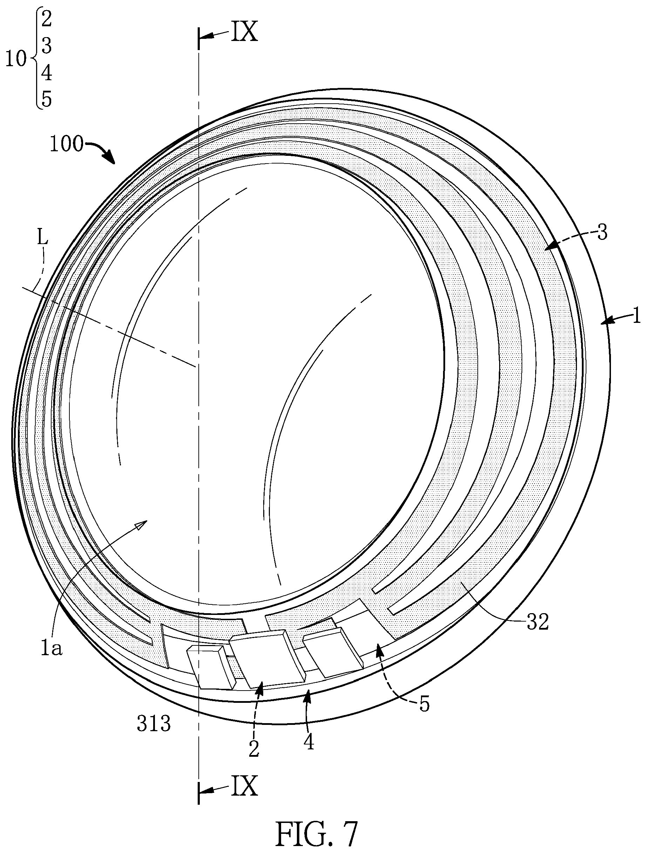

As shown in FIG. 1 to FIG. 6, the circuit structure 3 in the present embodiment includes a carrier 31 and a circuit 32 (e.g., a metallic circuit) formed on the carrier 31. The circuit 32 is connected to the electronic component 2 to be electrically coupled to each other, but the present invention is not limited thereto. For example, as shown in FIG. 7 to FIG. 9, the circuit structure 3 can include a circuit 32 that is connected to the electronic component 2 and that is not formed on any carrier. In other words, the embedded module 10 of the present embodiment can provide a pre-positioning function for the circuit 32 through the front supporting ring 4 and the rear supporting ring 5, thereby preventing the circuit 32 in the manufacturing process of the lens body 1 from being moved or being deformed.

In the present embodiment, as shown in FIG. 1 to FIG. 6, the carrier 31 can be shaped to form a predetermined curved structure by being pressed from a mold at a normal temperature or a high temperature, so that the carrier 31 has a fixed curvature that is different from the second curvature, and the fixed curvature is preferably close to the predetermined curvature provided by the rear surface 1b and the rear curved surface 52 (e.g., the fixed curvature is 100% to 110% of the predetermined curvature), but the present invention is not limited thereto.

The carrier 31 in the present embodiment is a flexible printed circuit board (FPCB) having a thickness within a range from 10 µm to 300 µm. Moreover, the thickness of the carrier 31 is preferably within a range from 40 µm to 80 µm, and polymer materials of the carrier 31 can include polyimide (PI), liquid-crystal polymer (LCP), polyethylene terephthalate (PET), or poly(ethylene 2,6-naphthalene dicarboxylate) (PEN), but the present invention is not limited thereto.

Specifically, the carrier 31 has a C-shaped segment 311 that is embedded in the layout region 121 and a connection segment 312 that is embedded in the lower eyelid region 122. The connection segment 312 is connected in-between two distal ends of the C-shaped segment 311. The electronic component 2 can be assembled to the connection segment 312, and the circuit 32 is formed on the C-shaped segment 311 and extends to the connection segment 312 for being electrically coupled to the electronic component 2.

Moreover, since the carrier 31 easily wrinkles or has stress concentration in a pressing and forming process, the C-shaped segment 311 has at least one thru-hole 3111 that is fully filled with the lens body 1 (e.g., the annular wearing portion 12). It should be noted that, in a top view of the contact lens 100 along (or perpendicular to) the central axis L, an area of the at least one thru-hole 3111 is 1% to 85% (e.g., preferably 10% to 40%) of an area surrounded by an outer contour of the C-shaped segment 311, thereby effectively reducing generation of the wrinkles or the stress concentration on the carrier 31, and further increasing the oxygen permeability of the contact lens 100 by being in cooperation with the free curved surface 12a.

In addition, the carrier 31 can have a plurality of radial notches 313 recessed from an outer edge thereof toward the central axis L so as to allow the carrier 31 to have a fixed curvature, thereby further reducing the generation of wrinkles or the stress concentration on the carrier 31. In the present embodiment, the radial notches 313 are fully filled with the annular wearing portion 12, and the radial notches 313 are respectively formed on boundaries between the C-shaped segment 311 and the connection segment 312, but the present invention is not limited thereto.

Moreover, in the top view of the contact lens 100, the area of the at least one thru-hole 3111 is 1% to 75% of an area of the annular wearing portion 12. Moreover, a quantity of the at least one thru-hole 3111 formed on the C-shaped segment 311 in the present embodiment is more than one, but the present invention is not limited thereto. For example, in other embodiments of the present invention not shown in the drawings, the C-shaped segment 311 of the carrier 31 can be formed without any thru-hole 3111.

In the present embodiment, the circuit 32 has at least one enclosed loop, and the thru-holes 3111 of the C-shaped segment 311 are arranged in the at least one enclosed loop of the circuit 32. It should be noted that a quantity of the at least one enclosed loop in the present embodiment is more than one, and the thru-holes 3111 are respectively arranged in the enclosed loops of the circuit 32, but the present invention is not limited thereto.

Each of the thru-holes 3111 is curved and has a width that gradually increases from two ends thereof toward a center thereof (e.g., the thru-hole 3111 in the present embodiment is substantially in a crescent shape). Specifically, any one of the thru-holes 3111 has an inner edge 3112 and an outer edge 3113, and two ends of the inner edge 3112 are respectively connected to two ends of the outer edge 3113 so as to form the two ends of the thru-hole 3111.

Any one of the inner edge 3112 and the outer edge 3113 is in an arced shape, a radius of the inner edge 3112 is less than a radius of the outer edge 3113, and a center of the inner edge 3112 and a center of the outer edge 3113 are respectively located on two different planes perpendicular to the central axis L. In other words, each of the thru-holes 3111 in the present embodiment is arranged along the fixed curvature of the carrier 31 and is not located on a flat plane.

In order to clearly describe the arrangement of the thru-holes 3111, the following relationships are described according to the top view of the contact lens 100. The central axis L defines an origin point, an X axis, and a Y axis that is perpendicular to the X axis, and the X axis and the Y axis are intersected at the origin point. The contact lens 100 is sequentially divided into a first quadrant Q1, a second quadrant Q2, a third quadrant Q3, and a fourth quadrant Q4 along a counterclockwise direction with respect to the origin point.

In the top view of the contact lens 100, the lower eyelid region 122 is arranged in the third quadrant Q3 and the fourth quadrant Q4, the Y axis is substantially a center line of the lower eyelid region 122, and a central angle σ122 of the lower eyelid region 122 with respect to the origin point is preferably within a range from 30 degrees to 180 degrees. The central angle σ122 can be changed according to design requirements and is not limited by the present embodiment.

Moreover, in the top view of the contact lens 100, the thru-holes 3111 are arranged in the first quadrant Q1, the second quadrant Q2, the third quadrant Q3, and the fourth quadrant Q4 (e.g., four parts of the thru-holes 3111 are respectively arranged in the first quadrant Q1, the second quadrant Q2, the third quadrant Q3, and the fourth quadrant Q4), and an area of any one of the four parts of the thru-holes 3111 is 50% to 150% of an area of another one of the four parts of the thru-holes 3111.

Specifically, in the top view of the contact lens 100, any one of the thru-holes 3111 is arranged across at least two quadrants (e.g., any one of the thru-holes 3111 is arranged in the first quadrant Q1 and the fourth quadrant Q4, or is arranged in the second quadrant Q2 and the third quadrant Q3), and any one of the thru-holes 3111 can be mirror symmetrical across the X axis, but the present invention is not limited thereto.

The thru-holes 3111 include at least one first thru-hole 3111a and at least one second thru-hole 3111b. Moreover, a quantity of the at least one first thru-hole 3111a and a quantity of the at least one second thru-hole 3111b in the present embodiment can each be more than one, but the present invention is not limited thereto. The first thru-holes 3111a are located at an inner side of the second thru-holes 3111b. In other words, a radius of each of the second thru-holes 3111b is different from (e.g., greater than) a radius of each of the first thru-holes 3111a.

In the present embodiment, each of the first thru-holes 3111a is in an arced shape having a center of circle located on the central axis L, and the first thru-holes 3111a are spaced apart from each other. Each of the second thru-holes 3111b is in an arced shape having a center of circle located on the central axis L, and the second thru-holes 3111b are spaced apart from each other.

Moreover, any one of the first thru-holes 3111a is located in a region defined by a central angle of the corresponding second thru-hole 3111b, and a partition between any two of the first thru-holes 3111a adjacent to each other and a partition between any two of the second thru-holes 3111b adjacent to each other are not arranged in a same radial direction of the contact lens 100.

It should be noted that the contact lens 100 in the present embodiment can be further cooperated with any type of device. For example, in other embodiments of the present invention not shown in the drawings, the contact lens 100 can be wirelessly connected to any wearable device (e.g., a glasses-mounted reader or a neck-worn reader) worn on a user, and the wearable device (or the reader) can use a common wireless transmission technology (e.g., the RFID technology in a bandwidth of 13.56 MHz or 860-960 MHz) or other wireless technologies of induction power or signal transmission so as to supply power, sensing function, or signal feedback for the contact lens 100, thereby providing an intelligent monitoring (e.g., a full-time intraocular pressure value collection and warning), an intelligent treatment (e.g., a dry-eye drug sustained release control), AR services (e.g., an image projection), or other intelligent applications.

In addition, the embedded module 10 of the present embodiment is provided by using the front supporting ring 4 and the rear supporting ring 5 to jointly sandwich the circuit structure 3 and the electronic component 2, but the present disclosure is not limited thereto. For example, in other embodiments of the present disclosure not shown in the drawings, each of the front supporting ring 4 and the rear supporting ring 5 can be changed to be a plurality of supporting bodies having an annular arrangement. In other words, some parts of the front supporting ring 4 (or the rear supporting ring 5) can be removed, so as to enable the front supporting ring 4 (or the rear supporting ring 5) to become the supporting bodies spaced apart from each other.

Specifically, the supporting bodies are arranged outside of the optical portion 11, and each of the supporting bodies has a curved surface and a carrying surface. The curved surface of each of the supporting bodies is flush with one of the front surface 1a and the rear surface 1b of the lens body 1, and the circuit structure 3 (and the electronic component 2) can be fixed onto the carrying surfaces of the supporting bodies.

### [Second Embodiment]

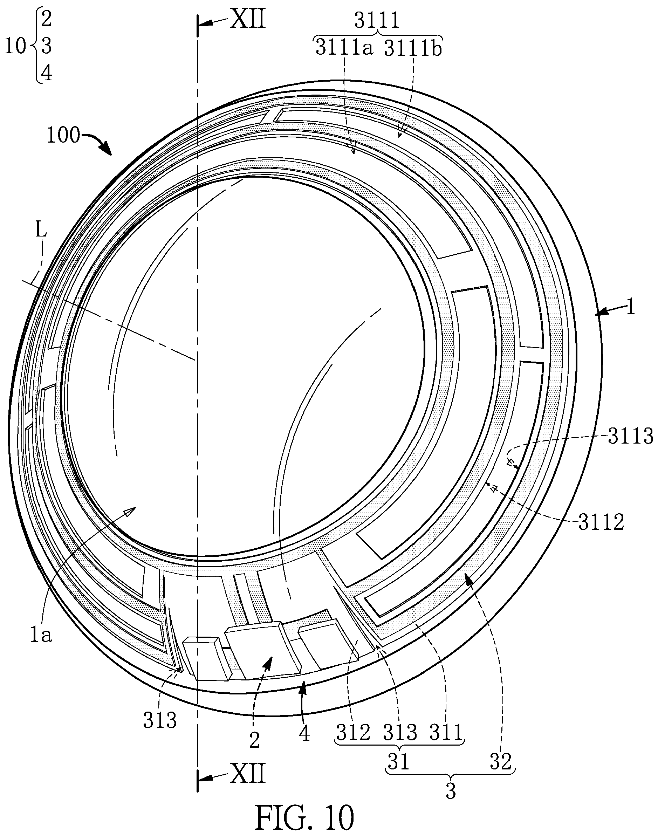

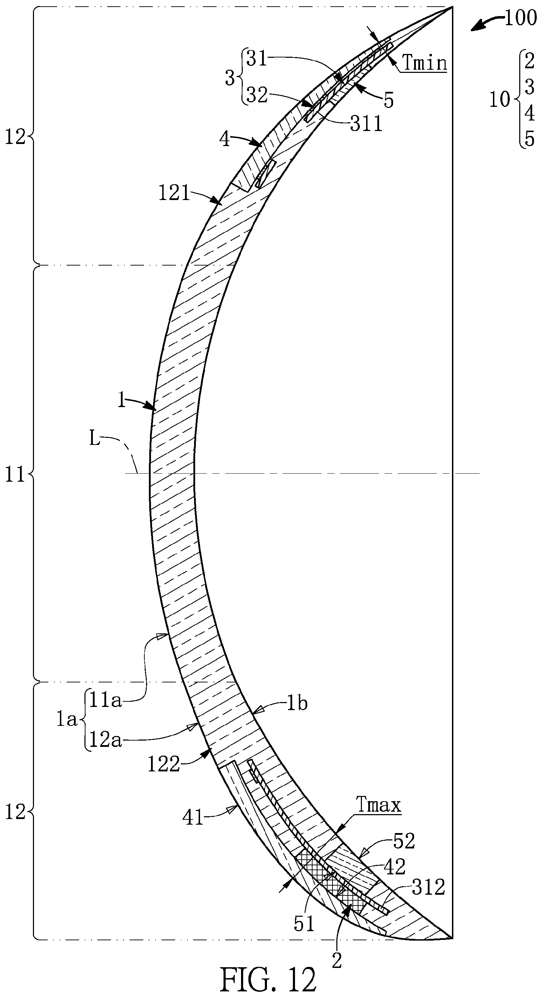

Referring to FIG. 10 to FIG. 12, a second embodiment of the present invention, which is similar to the first embodiment of the present invention, is provided. For the sake of brevity, descriptions of the same components in the first and second embodiments of the present invention will be omitted herein, and the following description only discloses different features between the first and second embodiments.

In the present embodiment, each of the thru-holes 3111 has an elongated shape substantially having a same width, and the carrier 31 has a plurality of radial notches 313 recessed from an outer edge thereof toward the central axis L.

Specifically, in the top view of the contact lens 100, an area of the thru-holes 3111 arranged in the first quadrant Q1 and the second quadrant Q2 can be greater than an area of the thru-holes 3111 arranged in the third quadrant Q3 and the fourth quadrant Q4. Moreover, an area of the thru-holes 3111 should be 1% to 85% (e.g., preferably 10% to 40%) of an area surrounded by an outer contour of the C-shaped segment 311.

Moreover, the thru-holes 3111 include a plurality of first thru-holes 3111a and a plurality of second thru-holes 3111b. The first thru-holes 3111a are located at an inner side of the second thru-holes 3111b. In other words, a radius of each of the second thru-holes 3111b is different from (e.g., greater than) a radius of each of the first thru-holes 3111a.

In the present embodiment, each of the first thru-holes 3111a is in an arced shape having a center of circle located on the central axis L, and the first thru-holes 3111a are spaced apart from each other. Each of the second thru-holes 3111b is in an arced shape having a center of circle located on the central axis L, and the second thru-holes 3111b are spaced apart from each other.

### [Third Embodiment]

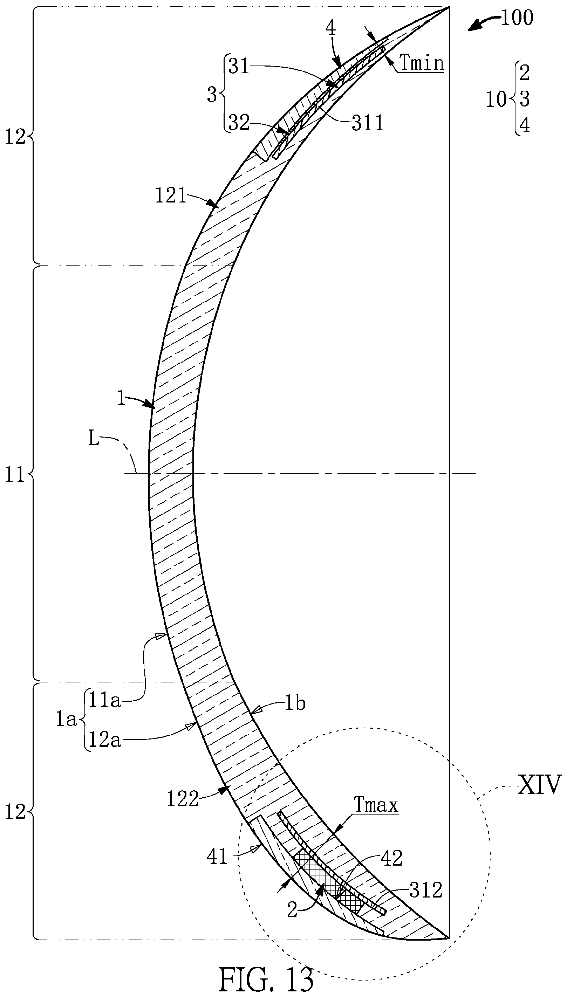

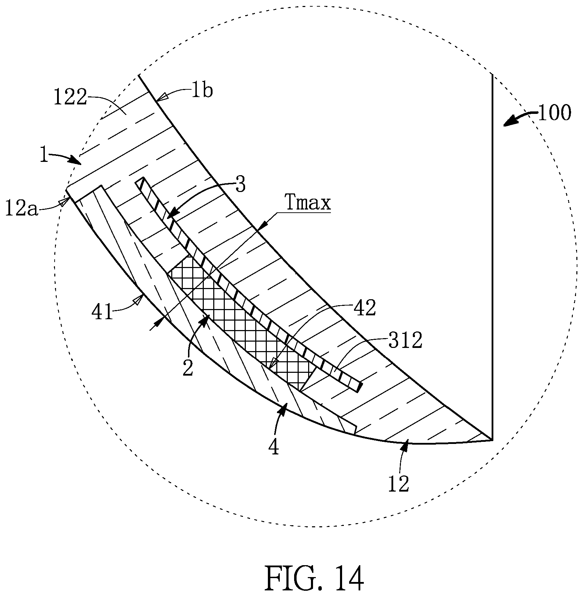

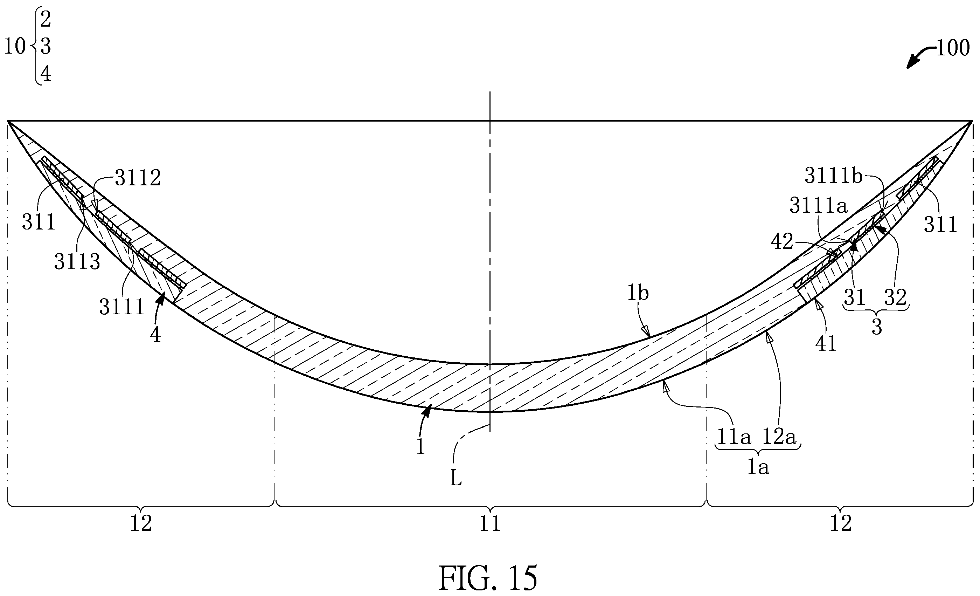

Referring to FIG. 13 to FIG. 15, a third embodiment of the present invention, which is similar to the first and second embodiments of the present invention, is provided. For the sake of brevity, descriptions of the same components in the first to third embodiments of the present invention will be omitted herein, and the following description only discloses different features among the first to third embodiments.

In the present embodiment, the embedded module 10 can be provided without the rear supporting ring 5 described in the first embodiment, and the rear surface 1b of the lens body 1 has the predetermined curvature for being worn on the eye 200.

Specifically, the electronic component 2 and the circuit structure 3 are fixed onto the rear carrying surface 42 of the front supporting ring 4, such that the electronic component 2 and the circuit structure 3 can be entirely embedded in the annular wearing portion 12 (e.g., the embedded module 10 is not in contact with and is spaced apart from the rear surface 1b of the lens body 1). In other words, the front supporting ring 4 overlaps an entirety of the electronic component 2 and an entirety of the circuit structure 3 (along the central axis L), and the electronic component 2 and the circuit structure 3 are gaplessly connected to the annular wearing portion 12.

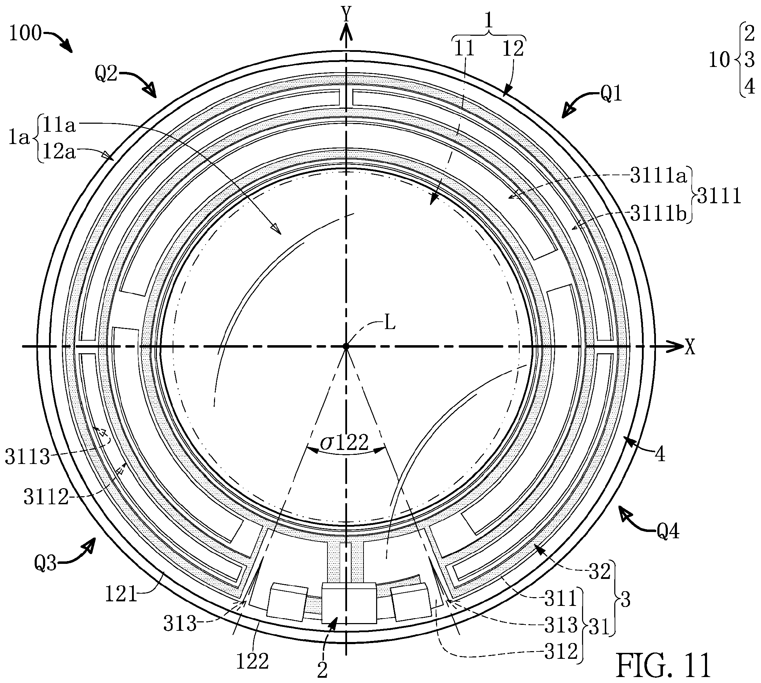

In addition, the circuit structure 3 can include the carrier 31 and the circuit 32, and the carrier 31 is formed in a structure shown in FIG. 1 and FIG. 2 provided by the first embodiment, but the present invention is not limited thereto. For example, in other embodiments of the present invention not shown in the drawings, the carrier 31 can be formed in a structure shown in FIG. 10 and FIG. 11 provided by the second embodiment; or, the circuit structure 3 can only include the circuit 32.

In addition, the embedded module 10 of the present embodiment is provided by using the front supporting ring 4 to fix the circuit structure 3 and the electronic component 2, but the present disclosure is not limited thereto. For example, in other embodiments of the present disclosure not shown in the drawings, the front supporting ring 4 can be changed to be a plurality of supporting bodies having an annular arrangement. In other words, some parts of the front supporting ring 4 can be removed, so as to enable the front supporting ring 4 to become the supporting bodies spaced apart from each other.

Specifically, the supporting bodies are arranged outside of the optical portion 11, and each of the supporting bodies has a curved surface and a carrying surface. The curved surface of each of the supporting bodies is flush with the front surface 1a of the lens body 1, and the circuit structure 3 (and the electronic component 2) can be fixed onto the carrying surfaces of the supporting bodies.

### [Fourth Embodiment]

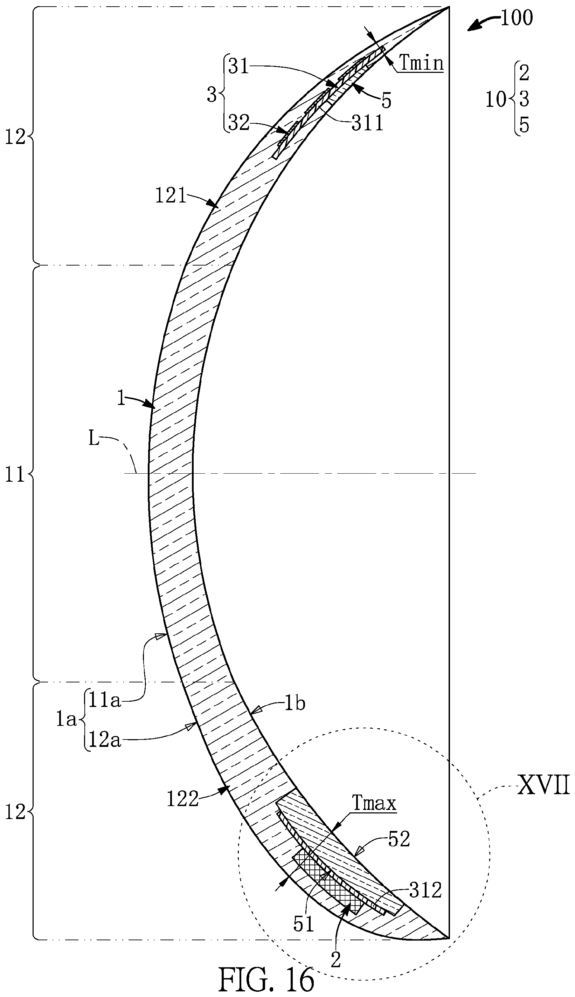

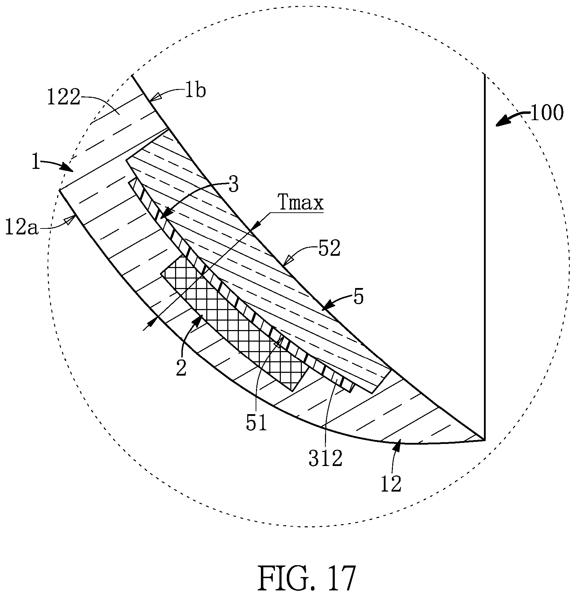

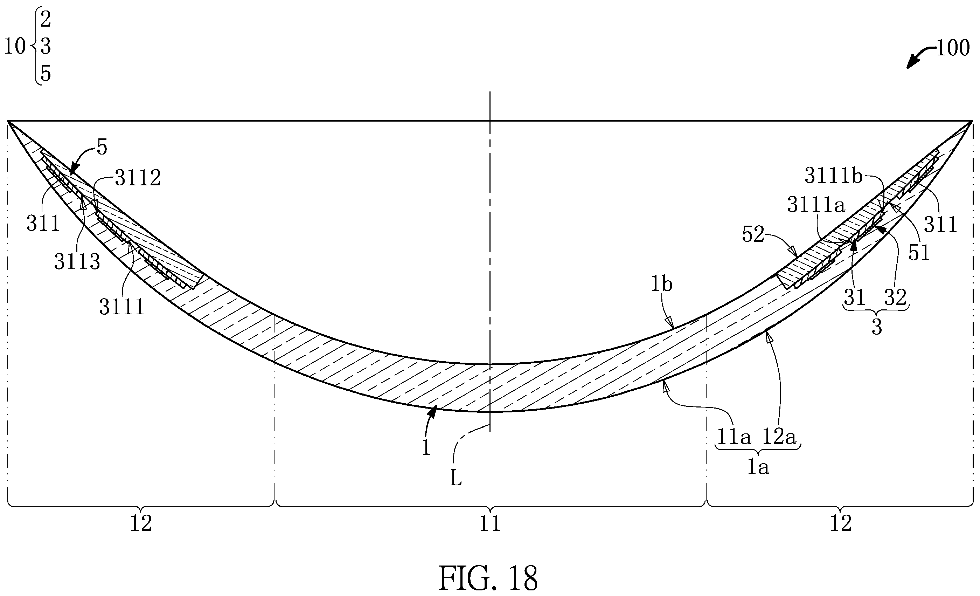

Referring to FIG. 16 to FIG. 18, a fourth embodiment of the present invention, which is similar to the first and second embodiments of the present invention, is provided. For the sake of brevity, descriptions of the same components in the first to fourth embodiments of the present invention will be omitted herein, and the following description only discloses different features among the first to fourth embodiments.

In the present embodiment, the embedded module 10 can be provided without the front supporting ring 4 described in the first embodiment, and the front surface 1a of the lens body 1 has a viewable surface 11a corresponding in position to the optical portion 11 and a free curved surface 12a that corresponds in position to the annular wearing portion 12.

Specifically, the electronic component 2 and the circuit structure 3 are fixed onto the front carrying surface 51 of the rear supporting ring 5, such that the electronic component 2 and the circuit structure 3 can be entirely embedded in the annular wearing portion 12 (e.g., the embedded module 10 is not in contact with and is spaced apart from the front surface 1a of the lens body 1). In other words, the rear supporting ring 5 overlaps an entirety of the electronic component 2 and an entirety of the circuit structure 3 (along the central axis L), and the electronic component 2 and the circuit structure 3 are gaplessly connected to the annular wearing portion 12.

In addition, the circuit structure 3 can include the carrier 31 and the circuit 32, and the carrier 31 is formed in a structure shown in FIG. 1 and FIG. 2 provided by the first embodiment, but the present invention is not limited thereto. For example, in other embodiments of the present invention not shown in the drawings, the carrier 31 can be formed in a structure shown in FIG. 10 and FIG. 11 provided by the second embodiment; or, the circuit structure 3 can only include the circuit 32.

In addition, the embedded module 10 of the present embodiment is provided by using the rear supporting ring 5 to fix the circuit structure 3 and the electronic component 2, but the present disclosure is not limited thereto. For example, in other embodiments of the present disclosure not shown in the drawings, the rear supporting ring 5 can be changed to be a plurality of supporting bodies having an annular arrangement. In other words, some parts of the rear supporting ring 5 can be removed, so as to enable the rear supporting ring 5 to become the supporting bodies spaced apart from each other.

Specifically, the supporting bodies are arranged outside of the optical portion 11, and each of the supporting bodies has a curved surface and a carrying surface. The curved surface of each of the supporting bodies is flush with the rear surface 1b of the lens body 1, and the circuit structure 3 (and the electronic component 2) can be fixed onto the carrying surfaces of the supporting bodies.

### [Beneficial Effects of the Embodiments]

In conclusion, in the contact lens provided by the present invention, the contact lens is designed to have at least one kind of the front supporting ring, the rear supporting ring, and the supporting bodies, which are made of the eye-friendly material, for clamping and pre-positioning the circuit structure and the electronic component therebetween, thereby facilitating the high precision positioning of the circuit structure and the electronic component in the manufacturing process of the contact lens. Accordingly, the contact lens can have a high conformity in mass production.

Moreover, the contact lens of the present invention is provided with the free curved surface arranged on the front surface of the lens body (and the front curved surface of the front supporting ring), so that a thickness of the layout region does not need to be based completely on (or be equal to) a thickness of the lower eyelid region for thinning the layout region (e.g., the thickness of the annular wearing portion gradually increases in a direction toward the lower eyelid region). Accordingly, an oxygen permeability of the layout region can be effectively increased, and the foreign body sensation of the contact lens can be reduced (or improved).

In addition, the contact lens of the present invention is provided with the at least one thru-hole being formed on the C-shaped segment and having a specific area (e.g., the area of the at least one thru-hole 3111 is 1% to 85% of the area surrounded by an outer contour of the C-shaped segment 311), thereby effectively reducing the generation of wrinkles or the stress concentration on the carrier, and further increasing the oxygen permeability of the contact lens by being in cooperated with the free curved surface.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its scope.

## Claims

1. A contact lens (100), comprising:
a lens body (1) including an optical portion (11) and an annular wearing portion (12) that surrounds the optical portion (11), wherein the lens body (1) has a front surface (1a) and a rear surface (1b) that is opposite to the front surface (1a); and
an embedded module (10) embedded in the annular wearing portion (12) and including:
a front supporting ring (4) being made of an eye-friendly material, wherein the front supporting ring (4) surrounds the optical portion (11) and has a front curved surface (41) and a rear carrying surface (42), and wherein the front curved surface (41) is flush with the front surface (1a) of the lens body (1);
a rear supporting ring (5) being made of an eye-friendly material, wherein the rear supporting ring (5) surrounds the optical portion (11) and has a rear curved surface (52) and a front carrying surface (51), and wherein the rear curved surface (52) is flush with the rear surface (1b) of the lens body (1) so as to be jointly configured for being worn on an eye (200); and
a circuit structure (3) sandwiched between the rear carrying surface (42) of the front supporting ring (4) and the front carrying surface (51) of the rear supporting ring (5), wherein the circuit structure (3) is entirely embedded in the annular wearing portion (12).

2. The contact lens (100) according to claim 1, wherein a material of the lens body (1), the eye-friendly material of the front supporting ring (4), and the eye-friendly material of the rear supporting ring (5) each include a hydrogel or a silicone hydrogel, and an outer surface of the contact lens (100) has no slot.

3. The contact lens (100) according to claim 1, wherein at least one of the front supporting ring (4) and the rear supporting ring (5) overlaps an entirety of the circuit structure (3), and lateral sides of the circuit structure (3) are gaplessly connected to the annular wearing portion (12).

4. The contact lens (100) according to claim 1, further comprising an electronic component (2) that is connected to the circuit structure (3) and that is sandwiched between the rear carrying surface (42) of the front supporting ring (4) and the front carrying surface (51) of the rear supporting ring (5), and wherein lateral sides of the electronic component (2) are gaplessly connected to the annular wearing portion (12).

5. The contact lens (100) according to claim 4, wherein the circuit structure (3) includes a circuit (32) that is connected to the electronic component (2) and that is not formed on any carrier.

6. The contact lens (100) according to claim 4, wherein the circuit structure (3) includes a carrier (31) and a circuit (32) that is formed on the carrier (31) and that is connected to the electronic component (2).

7. The contact lens (100) according to claim 6, wherein the carrier (31) includes:
a C-shaped segment (311) having at least one thru-hole (3111) that is fully filled with the annular wearing portion (12); and
a connection segment (312) connected in-between two distal ends of the C-shaped segment (311);
wherein, in a top view of the contact lens (100), an area of the at least one thru-hole (3111) is 1% to 85% of an area surrounded by an outer contour of the C-shaped segment (311).

8. The contact lens (100) according to claim 7, wherein the optical portion (11) defines a central axis (L); wherein, in the top view of the contact lens (100), the central axis (L) defines an origin point, the contact lens (100) is sequentially divided into a first quadrant (Q1), a second quadrant (Q2), a third quadrant (Q3), and a fourth quadrant (Q4) along a counterclockwise direction with respect to the origin point; and wherein four parts of the at least one thru-hole (3111) are respectively arranged in the first quadrant (Q1), the second quadrant (Q2), the third quadrant (Q3), and the fourth quadrant (Q4), and an area of any one of the four parts of the at least one thru-hole (3111) is 50% to 150% of an area of another one of the four parts of the at least one thru-hole (3111).

9. The contact lens (100) according to claim 6, wherein the optical portion (11) defines a central axis (L), and the carrier (31) has a plurality of radial notches (313) recessed from an outer edge thereof toward the central axis (L) so as to allow the carrier (31) to have a fixed curvature, and wherein the radial notches (313) are fully filled with the annular wearing portion (12).

10. The contact lens (100) according to claim 4, wherein the rear surface (1b) of the lens body (1) and the rear curved surface (52) of the rear supporting ring (5) jointly provide a predetermined curvature for being worn on the eye (200), the front surface (1a) of the lens body (1) has a viewable surface (11a) corresponding in position to the optical portion (11), and the front surface (1a) of the lens body (1) and the front curved surface (41) of the front supporting ring (4) jointly form a free curved surface (12a) that corresponds in position to the annular wearing portion (12), and wherein the viewable surface (11a) has a first curvature being different from a second curvature of the free curved surface (12a), and a thickness of the annular wearing portion (12) gradually increases in a direction toward the electronic component (2).

11. The contact lens (100) according to claim 10, wherein the annular wearing portion (12) has a layout region (121) being C-shaped and a lower eyelid region (122) that is arranged between two ends of the layout region (121) and that is connected to the lateral sides of the electronic component (2); and wherein, when the contact lens (100) is worn on the eye (200), a part of the contact lens (100) having a largest thickness (Tmax) is located inside of a lower eyelid (201) of the eye (200), and a part of the contact lens (100) having a smallest thickness (Tmin) is located inside of an upper eyelid (202) of the eye (200).

## Patentansprüche

1. Kontaktlinse (100), aufweisend:
einen Linsenkörper (1), welcher einen optischen Abschnitt (11) und einen ringförmigen Trageabschnitt (12) aufweist, welcher den optischen Abschnitt (11) umgibt, wobei der Linsenkörper (1) eine vordere Fläche (1a) und eine hintere Fläche (1b) hat, welche entgegengesetzt zu der vorderen Fläche (1a) ist; und
ein eingebettetes Modul (10), welches in den ringförmigen Trageabschnitt (12) eingebettet ist und aufweist:
einen vorderen Lagerring (4), welcher aus einem augenfreundlichen Material hergestellt ist, wobei der vordere Lagerring (4) den optischen Abschnitt (11) umgibt und eine vordere gekrümmte Fläche (41) und eine hintere tragende Fläche (42) hat, und wobei die vordere gekrümmte Fläche (41) bündig mit der vorderen Fläche (1a) des Linsenkörpers (1) ist;
einen hinteren Lagerring (5), welcher aus einem augenfreundlichen Material hergestellt ist, wobei der hintere Lagerring (5) den optischen Abschnitt (11) umgibt und eine hintere gekrümmte Fläche (52) und eine vordere tragende Fläche (51) hat, und wobei die hintere gekrümmte Fläche (52) bündig mit der hinteren Fläche (1b) des Linsenkörpers (1) ist, so dass sie gemeinsam konfiguriert ist, um auf einem Auge (200) getragen zu werden; und
eine Schaltkreisstruktur (3), welche sandwichartig zwischen der hinteren tragenden Fläche (42) des vorderen Lagerrings (4) und der vorderen tragenden Fläche (51) des hinteren Lagerrings (5) angeordnet ist, wobei die Schaltkreisstruktur (3) vollständig in den ringförmigen Trageabschnitt (12) eingebettet ist.

2. Kontaktlinse (100) gemäß Anspruch 1, wobei ein Material des Linsenkörpers (1), das augenfreundliche Material des vorderen Lagerrings (4) und das augenfreundliche Material des hinteren Lagerrings (5) jeweils ein Hydrogel oder ein Silikonhydrogel aufweisen, und eine äußere Fläche der Kontaktlinse (100) keinen Schlitz hat.

3. Kontaktlinse (100) gemäß Anspruch 1, wobei mindestens einer von dem vorderen Lagerring (4) und dem hinteren Lagerring (5) eine Gesamtheit der Schaltkreisstruktur (3) überlappt, und wobei seitliche Seiten der Schaltkreisstruktur (3) lückenlos mit dem ringförmigen Trageabschnitt (12) verbunden sind.

4. Kontaktlinse (100) gemäß Anspruch 1, welche ferner eine elektronische Komponente (2) aufweist, welche mit der Schaltkreisstruktur (3) verbunden ist und welche sandwichartig zwischen der hinteren tragenden Fläche (42) des vorderen Lagerrings (4) und der vorderen tragenden Fläche (51) des hinteren Lagerrings (5) angeordnet ist, und wobei seitliche Seiten der elektronischen Komponente (2) lückenlos mit dem ringförmigen Trageabschnitt (12) verbunden sind.

5. Kontaktlinse (100) gemäß Anspruch 4, wobei die Schaltkreisstruktur (3) einen Schaltkreis (32) aufweist, welcher mit der elektronischen Komponente (2) verbunden ist und welcher nicht auf irgendeiner Trägervorrichtung gebildet ist.

6. Kontaktlinse (100) gemäß Anspruch 4, wobei die Schaltkreisstruktur (3) eine Trägervorrichtung (31) und einen Schaltkreis (32) aufweist, welcher an der Trägervorrichtung (31) gebildet ist und welcher mit der elektronischen Komponente (2) verbunden ist.

7. Kontaktlinse (100) gemäß Anspruch 6, wobei die Trägervorrichtung (31) aufweist:
ein C-förmiges Segment (311), welches mindestens ein Durchgangsloch (3111) hat, welches vollständig mit dem ringförmigen Trageabschnitt (12) gefüllt ist; und
ein Verbindungssegment (312), welches zwischen zwei distalen Enden des C-förmigen Segments (311) verbunden ist;
wobei, in einer Von-Oben-Ansicht der Kontaktlinse (100), eine Fläche des mindestens einen Durchgangslochs (3111) 1 % bis 85 % einer Fläche beträgt, welche von einer Außenkontur des C-förmigen Segments (311) umgeben ist.

8. Kontaktlinse (100) gemäß Anspruch 7, wobei der optische Abschnitt (11) eine Mittelachse (L) definiert; wobei, in der Von-Oben-Ansicht der Kontaktlinse (100), die Mittelachse (L) einen Ursprungspunkt definiert, die Kontaktlinse (100) nacheinander in einen ersten Quadranten (Q1), einen zweiten Quadranten (Q2), einen dritten Quadranten (Q3) und einen vierten Quadranten (Q4) entlang einer Richtung gegen den Uhrzeigersinn in Bezug auf den Ursprungspunkt unterteilt ist; und wobei vier Teile des mindestens einen Durchgangslochs (3111) in jeweils zugeordneter Weise in dem ersten Quadranten (Q1), dem zweiten Quadranten (Q2), dem dritten Quadranten (Q3) und dem vierten Quadranten (Q4) angeordnet sind, und eine Fläche eines beliebigen von den vier Teilen des mindestens einen Durchgangslochs (3111) 50 % bis 150 % einer Fläche eines anderen von den vier Teilen des mindestens einen Durchgangslochs (3111) beträgt.

9. Kontaktlinse (100) gemäß Anspruch 6, wobei der optische Abschnitt (11) eine Mittelachse (L) definiert, und die Trägervorrichtung (31) mehrere radiale Aussparungen (313) hat, welche von einem Außenrandbereich davon in Richtung hin zu der Mittelachse (L) ausgespart sind, um es der Trägervorrichtung (31) zu ermöglichen, eine feste Krümmung zu haben, und wobei die radialen Aussparungen (313) vollständig mit dem ringförmigen Trageabschnitt (12) gefüllt sind.

10. Kontaktlinse (100) gemäß Anspruch 4, wobei die hintere Fläche (1b) des Linsenkörpers (1) und die hintere gekrümmte Fläche (52) des hinteren Lagerrings (5) gemeinsam eine vorbestimmte Krümmung bereitstellen, um auf dem Auge (200) getragen zu werden, die vordere Fläche (1a) des Linsenkörpers (1) eine sichtbare Fläche (11a) hat, welche positionsmäßig mit dem optischen Abschnitt (11) korrespondiert, und die vordere Fläche (1a) des Linsenkörpers (1) und die vordere gekrümmte Fläche (41) des vorderen Lagerrings (4) gemeinsam eine freie gekrümmte Fläche (12a) bilden, welche positionsmäßig mit dem ringförmigen Trageabschnitt (12) korrespondiert, und wobei die sichtbare Fläche (11a) eine erste Krümmung hat, welche sich von einer zweiten Krümmung der freien gekrümmten Fläche (12a) unterscheidet, und eine Dicke des ringförmigen Trageabschnitts (12) in einer Richtung in Richtung hin zu der elektronischen Komponente (2) sukzessive zunimmt.

11. Kontaktlinse (100) gemäß Anspruch 10, wobei der ringförmige Trageabschnitt (12) einen Grundrissbereich (121) , welcher C-förmig ist, und einen Unteres-Augenlid-Bereich (122) hat, welcher zwischen zwei Enden des Grundrissbereichs (121) angeordnet ist und mit den seitlichen Seiten der elektronischen Komponente (2) verbunden ist; und wobei, wenn die Kontaktlinse (100) auf dem Auge (200) getragen wird, ein Teil der Kontaktlinse (100), welcher eine größte Dicke (Tmax) hat, innerhalb eines unteren Augenlids (201) des Auges (200) angeordnet ist, und ein Teil der Kontaktlinse (100), welcher eine kleinste Dicke (Tmin) hat, innerhalb eines oberen Augenlids (202) des Auges (200) angeordnet ist.

## Revendications

1. Lentille de contact (100), comprenant :
un corps de lentille (1) comportant une partie optique (11) et une partie d'usure annulaire (12) qui entoure la partie optique (11), le corps de lentille (1) ayant une surface avant (1a) et une surface arrière (1b) qui est à l'opposé de la surface avant (1a) ; et
un module intégré (10), intégré dans la partie d'usure annulaire (12) et comportant :
un anneau de support avant (4) constitué d'un matériau respectueux des yeux, l'anneau de support avant (4) entourant la partie optique (11) et ayant une surface avant incurvée (41) et une surface arrière de support (42), et la surface avant incurvée (41) étant au même niveau que la surface avant (1a) du corps de lentille (1) ;
un anneau de support arrière (5) constitué d'un matériau respectueux des yeux, l'anneau de support arrière (5) entourant la partie optique (11) et ayant une surface arrière incurvée (52) et une surface avant de support (51), et la surface arrière incurvée (52) étant au même niveau que la surface arrière (1b) du corps de lentille (1) de manière à ce qu'elles soient configurées conjointement pour être portées sur un œil (200) ; et
une structure de circuit (3) intercalée entre la surface arrière de support (42) de l'anneau de support avant (4) et la surface avant de support (51) de l'anneau de support arrière (5), la structure de circuit (3) étant entièrement intégrée dans la partie d'usure annulaire (12).

2. Lentille de contact (100) selon la revendication 1, un matériau du corps de lentille (1), le matériau respectueux des yeux de l'anneau de support avant (4) et le matériau respectueux des yeux de l'anneau de support arrière (5) comportant chacun un hydrogel ou un hydrogel de silicone, et une surface extérieure de la lentille de contact (100) ne présentant pas de fente.

3. Lentille de contact (100) selon la revendication 1, dans laquelle au moins un anneau parmi l'anneau de support avant (4) et l'anneau de support arrière (5) chevauche une totalité de la structure de circuit (3), et des côtés latéraux de la structure de circuit (3) sont reliés sans espace à la partie d'usure annulaire (12).

4. Lentille de contact (100) selon la revendication 1, comprenant en outre un composant électronique (2) qui est relié à la structure de circuit (3) et qui est intercalé entre la surface de support arrière (42) de l'anneau de support avant (4) et la surface de support avant (51) de l'anneau de support arrière (5), et dans laquelle des côtés latéraux du composant électronique (2) sont reliés sans espace à la partie d'usure annulaire (12).

5. Lentille de contact (100) selon la revendication 4, dans laquelle la structure de circuit (3) comporte un circuit (32) qui est relié au composant électronique (2) et qui n'est formé sur aucun support.

6. Lentille de contact (100) selon la revendication 4, dans laquelle la structure de circuit (3) comporte un support (31) et un circuit (32) qui est formé sur le support (31) et qui est relié au composant électronique (2).

7. Lentille de contact (100) selon la revendication 6, dans laquelle le support (31) comporte :
un segment en forme de C (311) ayant au moins un trou traversant (3111) qui est entièrement rempli par la partie d'usure annulaire (12) ; et
un segment de liaison (312) relié entre deux extrémités distales du segment en forme de C (311) ;
dans laquelle, dans une vue de dessus de la lentille de contact (100), une aire de l'au moins un trou traversant (3111) représente 1 % à 85 % d'une aire entourée par un contour extérieur du segment en forme de C (311).

8. Lentille de contact (100) selon la revendication 7, dans laquelle la partie optique (11) définit un axe central (1) ; dans laquelle, dans la vue de dessus de la lentille de contact (100), l'axe central (1) définit un point d'origine, la lentille de contact (100) est successivement divisée en un premier quadrant (Q1), un deuxième quadrant (Q2), un troisième quadrant (Q3) et un quatrième quadrant (Q4) le long d'une direction antihoraire par rapport au point d'origine ; et dans laquelle quatre parties de l'au moins un trou traversant (3111) sont respectivement disposées dans le premier quadrant (Q1), le deuxième quadrant (Q2), le troisième quadrant (Q3) et le quatrième quadrant (Q4), et une aire de l'une quelconque des quatre parties de l'au moins un trou traversant (3111) représente 50 % à 150 % d'une aire d'une autre des quatre parties de l'au moins un trou traversant (3111).

9. Lentille de contact (100) selon la revendication 6, dans laquelle la partie optique (11) définit un axe central (1), et le support (31) présente une pluralité d'encoches radiales (313) en retrait d'un bord extérieur de celui-ci vers l'axe central (1) de manière à permettre au support (31) d'avoir une courbure fixe, et dans laquelle les encoches radiales (313) sont entièrement remplies par la partie d'usure annulaire (12).

10. Lentille de contact (100) selon la revendication 4, dans laquelle la surface arrière (1b) du corps de lentille (1) et la surface arrière incurvée (52) de l'anneau de support arrière (5) fournissent conjointement une courbure prédéterminée destinée à être portée sur l'œil (200), la surface avant (1a) du corps de lentille (1) a une surface visible (11a) dont la position correspond à celle de la partie optique (11), et la surface avant (1a) du corps de lentille (1) et la surface avant incurvée (41) de l'anneau de support avant (4) forment conjointement une surface incurvée libre (12a) dont la position correspond à celle de la partie annulaire d'usure (12), et dans laquelle la surface visible (11a) présente une première courbure différente d'une deuxième courbure de la surface incurvée libre (12a), et une épaisseur de la partie annulaire d'usure (12) augmente progressivement en direction du composant électronique (2).

11. Lentille de contact (100) selon la revendication 10, dans laquelle la partie d'usure annulaire (12) présente une région d'agencement (121) en forme de C et une région de paupière inférieure (122) qui est disposée entre deux extrémités de la région d'agencement (121) et qui est reliée aux côtés latéraux du composant électronique (2) ; et dans laquelle, lorsque la lentille de contact (100) est portée sur l'œil (200), une partie de la lentille de contact (100) ayant la plus grande épaisseur (Tmax) est située à l'intérieur d'une paupière inférieure (201) de l'œil (200), et une partie de la lentille de contact (100) ayant la plus petite épaisseur (Tmin) est située à l'intérieur d'une paupière supérieure (202) de l'œil (200).
